# FASCICULE DE BREVET EUROPEEN

(11) **EP 3 594 047 B1**
(45) Date de publication et mention de la délivrance du brevet: **06.04.2022**
(21) Numéro de dépôt: 19180757.7
(22) Date de dépôt: 18.06.2019
(51) Int. Cl.: B60L 50/53, B60L 1/00, B60L 9/00

(54) **PROCÉDÉ DE RÉGULATION DE LA PUISSANCE ÉLECTRIQUE INSTANTANÉE FOURNIE À UN VÉHICULE FERROVIAIRE PAR UNE SOURCE EXTERNE**
REGULIERUNGSVERFAHREN DER ELEKTRISCHEN SOFORTLEISTUNG, DIE EINEM SCHIENENFAHRZEUG VON EINER EXTERNEN QUELLE GELIEFERT WIRD
METHOD FOR CONTROLLING INSTANT ELECTRIC POWER OUTPUT TO A RAILWAY VEHICLE BY AN EXTERNAL SOURCE

(30) Priorité: 26.06.2018 FR 1855740
(43) Date de publication de la demande: 15.01.2020
(73) Titulaire: SNCF Voyageurs, 93200 Saint-Denis (FR)
(72) Inventeur: GOERES, David, 72000 LE MANS (FR); JOSSET, Sébastien, 72000 LE MANS (FR); LAVIGNE, Philippe, 37270 VERETZ (FR)
(74) Mandataire: IPAZ

(56) Documents cités:
- EP-A1- 2 340 957
- EP-A1- 2 599 656
- EP-A2- 2 020 726
- US-A1- 2014 012 446
- US-A1- 2015 061 377

## Description

La présente invention concerne un procédé de régulation de la puissance électrique instantanée fournie à un véhicule ferroviaire par une source externe. Elle concerne également un véhicule ferroviaire mettant en œuvre un tel procédé.

Le domaine de l'invention est le domaine ferroviaire, et plus particulièrement, le domaine de la gestion de l'énergie électrique fournie à un véhicule ferroviaire électrique.

### Etat de la technique

Un véhicule ferroviaire électrique, de type train ou tramway, est alimenté en électricité grâce à une caténaire, un rail ou encore par un dispositif inductif, prévu à cet effet le long de la voie ferrée. Dans tous les cas, l'électricité est fournie par une source externe au véhicule ferroviaire.

La puissance électrique totale consommée, en un instant donné, par une flotte de véhicules électriques circulant au sein d'un réseau ferroviaire peut présenter des variations importantes. Une trop grande puissance électrique instantanée fournie à une flotte de véhicules ferroviaires peut engendrer une détérioration des équipements ferroviaires, et mettre en difficulté le réseau électrique, et par voie de conséquence, les installations tierces alimentées par ce réseau ; certaines installations tierces peuvent même se trouver en défaut d'alimentation.

Une première solution pour limiter la puissance électrique consommée par une flotte de véhicules ferroviaire est de diminuer le nombre de véhicules en circulation, ce qui n'est pas toujours possible, en particulier pendant les heures de pointe.

Une deuxième solution consiste à diminuer la puissance consommée au sein de chaque véhicule en éteignant certains auxiliaires, tel que par exemple l'air conditionné, le chauffage, la ventilation, etc. ; ce qui dégrade le fonctionnement du véhicule ferroviaire. Le document EP 2 340 957 A1 décrit un dispositif de contrôle de la propulsion d'une voiture électrique. Plus particulièrement, le dispositif selon ce document est alimente par une ligne électrique aérienne. Lorsqu'une défaillance se produit sur la ligne, tel qu'un court-circuit, le dispositif selon ce document n'est plus alimente par la ligne mais par une batterie interne au véhicule. Le document US 2015/061377 A1 décrit un dispositif permettant une alimentation d'un véhicule ferroviaire en cas d'urgence, c'est à dire lorsque qu'une défaillance apparait sur les lignes aériennes d'alimentation dudit véhicule. Dans ce cas, le véhicule est alimente par une batterie. Le document US 2014/012446 A1 décrit un procédé pour faire fonctionner un système de véhicule hybride. Le procédé selon ce document décrit un véhicule alimente par une source externe. Le véhicule comprend en outre une batterie. Ladite batterie est alimentée par la source externe lorsque la propulsion du véhicule est alimentée par la source externe. Lorsque le véhicule ne peut plus être alimente par la source externe, la batterie alimente en énergie le système de propulsion dudit véhicule. Le document EP 2 020 726 A2 décrit un procédé d'alimentation de charges auxiliaires de secours, utilise dans des véhicules ferroviaires. Le mode de secours correspond à l'état pour lequel le véhicule ferroviaire n'est plus alimente par une charge externe, le catenaire, suite a une défaillance. Le document EP 2 599 656 A1 décrit un dispositif de commande d'une propulsion d'un véhicule électrique possédant un dispositif accumulateur d'énergie, notamment dans le cadre des véhicules ferroviaires. Le dispositif selon ce document est alimente par une ligne aérienne transmettant un courant continu. Le dispositif comprend un l'élément de stockage de l'énergie électrique qui est alimente par la ligne aérienne. Lorsque l'élément de stockage est charge, la propulsion du véhicule est assurée par l'élément de stockage, l'alimentation par la ligne aérienne est ensuite interrompue.

Il n'existe donc actuellement aucun procédé permettant de moduler la puissance électrique instantanée fournie à un véhicule ferroviaire, ou à une flotte de véhicules ferroviaires, par un réseau électrique, tout en maintenant un fonctionnement normal dudit véhicule ferroviaire, respectivement de ladite flotte de véhicules ferroviaires.

Un but de la présente invention est de remédier à au moins un de ces inconvénients.

Un autre but de l'invention est de proposer un procédé de régulation de la puissance électrique instantanée fournie à un véhicule ferroviaire par une source externe au véhicule, tout en maintenant un fonctionnement normal au sein dudit véhicule ferroviaire.

Un autre but de l'invention est de proposer un procédé de régulation de la puissance électrique instantanée fournie à un véhicule ferroviaire par une source externe audit véhicule, sans diminuer la puissance électrique instantanée disponible au sein dudit véhicule.

### Exposé de l'invention

L'invention propose d'atteindre au moins un de ces objectifs par un procédé de régulation de la puissance électrique instantanée fournie par une source électrique externe à un véhicule ferroviaire, ledit procédé comprenant au moins une itération d'une phase, dite de régulation, comprenant les étapes suivantes :
- réception, au niveau dudit véhicule ferroviaire, d'une requête, dite d'effacement, pour modifier la puissance instantanée fournie par ladite source externe audit véhicule ;
- basculement d'au moins une partie de l'alimentation d'au moins un auxiliaire électrique dudit véhicule ferroviaire, préalablement alimenté par ladite source externe, vers une source électrique embarquée dans ledit véhicule ferroviaire, tout en alimentant la motorisation électrique de traction dudit véhicule ferroviaire par ladite source externe ; et
- alimentation dudit au moins un auxiliaire électrique par ladite source électrique embarquée.

Ainsi, le procédé selon l'invention permet de diminuer la puissance électrique instantanée fournie à un véhicule ferroviaire par une source externe, telle qu'une caténaire, un rail ou un dispositif inductif, sans pour autant diminuer la puissance électrique instantanée disponible au sein dudit véhicule. Le fonctionnement des appareils électriques au sein du véhicule peut donc être maintenu sans modification.

Par conséquent, le procédé selon l'invention permet de diminuer la puissance électrique instantanée fournie au véhicule ferroviaire, tout en maintenant son fonctionnement.

Par « source électrique externe », on entend une caténaire, un rail, un dispositif inductif, et plus généralement tout dispositif alimentant un véhicule ferroviaire au niveau, ou le long, de la voie ferrée sur laquelle il se trouve.

Par « auxiliaire électrique », on entend tout dispositif ou appareil électrique se trouvant au sein du véhicule électrique, autre que le(s) moteur(s) électrique(s) de traction, également appelés « motorisation de traction » ou « motorisation électrique de traction ».

Par « source électrique embarquée », on entend toute source délivrant un signal d'alimentation électrique et embarquée dans le véhicule ferroviaire, tel que par exemple un générateur d'électricité à partir d'un combustible fossile, une pile à combustible, une batterie électrique rechargeable, un générateur d'électricité à partir d'une source renouvelable, etc.

Par « batterie », on entend tout module de stockage d'énergie électrique, en particulier rechargeable, pouvant comprendre un ou plusieurs éléments de stockage d'énergie électrique. Ainsi, le mot « batterie » peut désigner un ensemble de plusieurs batteries, ou plusieurs modules de stockage d'énergie électriques, éventuellement distribués au sein du véhicule électrique.

Préférentiellement, l'étape d'alimentation d'au moins un auxiliaire électrique par la source embarquée peut être limitée à une durée prédéterminée, au bout de laquelle, l'alimentation dudit auxiliaire électrique est rebasculée vers la source externe.

La durée prédéterminée peut être fixe pour le véhicule ferroviaire.

La durée prédéterminée peut être variable. Elle peut être calculée en fonction de la puissance disponible dans la source embarquée, et éventuellement en fonction de la puissance instantanée demandée au sein du véhicule.

Alternativement, l'étape d'alimentation d'au moins un auxiliaire électrique par la source embarquée peut être réalisée jusqu'à épuisement de la source embarquée.

Suivant une caractéristique particulièrement avantageuse, l'étape de basculement de l'alimentation d'au moins un auxiliaire électrique vers la source embarquée peut comprendre les opérations suivantes :
- fermeture d'un circuit électrique reliant ledit auxiliaire électrique à ladite source embarquée, puis
- ouverture d'un circuit électrique reliant ledit auxiliaire électrique à la source externe ;
de sorte qu'il n'y a pas de rupture d'alimentation dudit auxiliaire électrique.

Ainsi, le basculement de l'alimentation de l'auxiliaire vers la source embarquée peut être réalisé sans l'arrêt dudit auxiliaire, et de manière complètement transparente pour son fonctionnement. L'auxiliaire est alimenté de manière continue pendant l'étape de basculement.

Le re-basculement de l'alimentation de l'auxiliaire électrique vers la source externe peut également être réalisée sans rupture d'alimentation, en assurant la continuité de l'alimentation électrique dudit auxiliaire. Dans ce cas, le circuit reliant l'auxiliaire à la source externe est fermé avant d'ouvrir le circuit reliant l'auxiliaire à la source embarquée.

Au moins un auxiliaire électrique peut être alimenté par la source embarquée au travers d'un convertisseur dédié à ladite source embarquée.

Dans ce cas, lors de l'étape de basculement de l'alimentation de l'auxiliaire, ce dernier est relié, directement ou indirectement, audit convertisseur dédié à la source embarquée.

Ainsi, il est possible de choisir un convertisseur électrique parfaitement adapté à la source embarquée et de diminuer les pertes électriques.

De plus, dans ce mode de réalisation, il est possible de choisir une source embarquée délivrant un signal électrique de caractéristiques différentes de celles du signal électrique délivré par la source externe.

Alternativement ou en plus, au moins un auxiliaire électrique peut être alimenté par la source embarquée au travers d'un convertisseur dédié audit au moins un auxiliaire électrique.

Dans ce cas, lors de l'étape de basculement de l'alimentation de l'auxiliaire, c'est le convertisseur dédié à l'auxiliaire qui est relié, directement ou indirectement, à la source embarquée.

Ainsi, il est possible de choisir un convertisseur électrique parfaitement adapté à l'auxiliaire quelle que soit la source d'alimentation dudit l'auxiliaire.

De plus, il est possible d'utiliser un même et unique convertisseur que l'auxiliaire soit alimenté par la source externe ou par la source embarquée.

Suivant une caractéristique préférentielle, le procédé selon l'invention peut comprendre une étape de charge de la source embarquée par la source externe, lorsque ladite source embarquée est une source électrique rechargeable.

Une telle étape de charge de la source embarquée peut être mise en œuvre avant et/ou après une phase de régulation.

Préférentiellement, une telle étape de charge de la source embarquée peut être mise en œuvre en dehors d'une période de forte consommation électrique.

La requête d'effacement peut être émise, ou confirmée, par un conducteur du véhicule ferroviaire.

Une telle émission, ou confirmation, peut être réalisée par appui sur un bouton, physique ou tactile, prévu à cet effet dans le véhicule, et en particulier dans la cabine conducteur.

Alternativement, ou en plus, la requête d'effacement peut être émise par un site distant du véhicule ferroviaire.

Dans ce cas, le site distant est en communication sans fil avec le véhicule ferroviaire.

La communication sans fil peut être réalisée par une connexion radiofréquence ou par une connexion satellite, dédiée ou non.

La communication sans fil peut être réalisée au travers d'un réseau de communication sans fil. Un tel réseau de communication sans fil peut être un réseau de téléphonie mobile, un réseau Internet, par exemple un réseau de type 3G/4G/5G etc.

Suivant un autre aspect de la présente invention, il est proposé un procédé de modulation de la puissance électrique instantanée fournie à une flotte de véhicules ferroviaires, par une source externe auxdits véhicules, ledit procédé comprenant au moins une itération d'une phase, dite de modulation de puissance, comprenant les étapes suivantes :
- détermination d'une puissance instantanée, dite totale, fournie à ladite flotte de véhicules ferroviaires par ladite source externe, et
- régulation de la puissance instantanée, fournie par ladite source externe, à au moins un véhicule de ladite flotte, dit véhicule cible, par le procédé de régulation de puissance selon l'invention.

La puissance instantanée totale fournie par la source externe à une flotte de véhicules ferroviaires peut être déterminée en additionnant la puissance instantanée fournie par ladite source externe à chaque véhicule ferroviaire de ladite flotte.

La puissance instantanée fournie par la source externe à un véhicule ferroviaire peut être déterminée en mesurant ladite puissance au niveau dudit véhicule par un appareil adapté.

Avantageusement, la détermination de la puissance instantanée totale fournie à la flotte de véhicules ferroviaires par ladite source externe est réalisée au niveau d'un site central.

Pour ce faire, chaque véhicule communique audit site central la puissance instantanée fournie par la source externe audit véhicule.

Avantageusement, pour au moins un véhicule cible, la requête d'effacement peut être émise par le site central, et éventuellement confirmée au niveau dudit véhicule cible.

Le procédé de modulation selon l'invention peut comprendre, avant l'étape de régulation, une comparaison de la valeur de la puissance instantanée totale à une valeur seuil prédéterminée.

La réalisation de l'étape de régulation peut être conditionnée au résultat de ladite comparaison.

En particulier, l'étape de régulation peut être réalisée lorsque la valeur de la puissance instantanée totale atteint ou dépasse ladite valeur seuil.

Suivant encore un autre aspect de la même invention, il est proposé un véhicule ferroviaire comprenant une interface d'alimentation électrique depuis une source externe, au moins une motorisation électrique de traction, et au moins un auxiliaire électrique, ledit véhicule comprenant en outre :
- au moins une source électrique embarquée, en particulier rechargeable,
- au moins un circuit électrique commandable pour relier, ou non, au moins un auxiliaire électrique à ladite au moins une source électrique embarquée, et
- au moins un module de commande dudit circuit électrique, configuré pour mettre en oeuvre toutes les étapes du procédé de régulation selon l'invention.

L'interface d'alimentation électrique peut être un pantographe, ou tout autre moyen pour réaliser une connexion électrique avec une source externe de type caténaire, rail électrique, etc.

De manière générale, le véhicule selon l'invention peut comprendre des moyens configurés pour mettre en œuvre les caractéristiques décrites plus haut en référence au procédé de régulation selon l'invention, et au procédé de modulation de puissance selon l'invention.

Par exemple, le véhicule selon l'invention peut comprendre un moyen de communication sans fil avec un site distant.

Le moyen de communication peut être utilisé pour :
- recevoir au moins une requête d'effacement depuis le site distant ; et
- éventuellement, émettre une valeur de puissance électrique instantanée fournie par la source externe audit véhicule.

Le véhicule selon l'invention peut être un train, une locomotive, un train-tram, un tramway, etc.

### Description des figures et modes de réalisation

D'autres avantages et caractéristiques apparaîtront à l'examen de la description détaillée d'un mode de réalisation nullement limitatif, et des dessins annexés sur lesquels
- la FIGURE 1 est une représentation schématique d'un exemple de de réalisation non limitatif d'un procédé de régulation de puissance selon l'invention ;
- la FIGURE 2 est une représentation schématique d'un exemple de de réalisation non limitatif d'un procédé de modulation de puissance selon l'invention ;
- la FIGURE 3 est une représentation schématique d'un premier exemple de réalisation non limitatif d'un véhicule selon l'invention ; et
- la FIGURE 4 est une représentation schématique d'un deuxième exemple de réalisation non limitatif d'un véhicule selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieur.

Sur les figures les éléments communs à plusieurs figures conservent la même référence.

Dans les exemples qui vont être décrits, le véhicule ferroviaire est un train alimenté par une source externe formée par une caténaire. Pour ce faire, le train comporte une interface d'alimentation électrique formée par un pantographe. De plus, le véhicule ferroviaire comporte une source électrique embarquée qui est une batterie électrique rechargeable.

Bien entendu, l'invention n'est pas limitée à cet exemple et concerne tout véhicule ferroviaire alimentée par une source externe et comportant une source électrique embarquée.

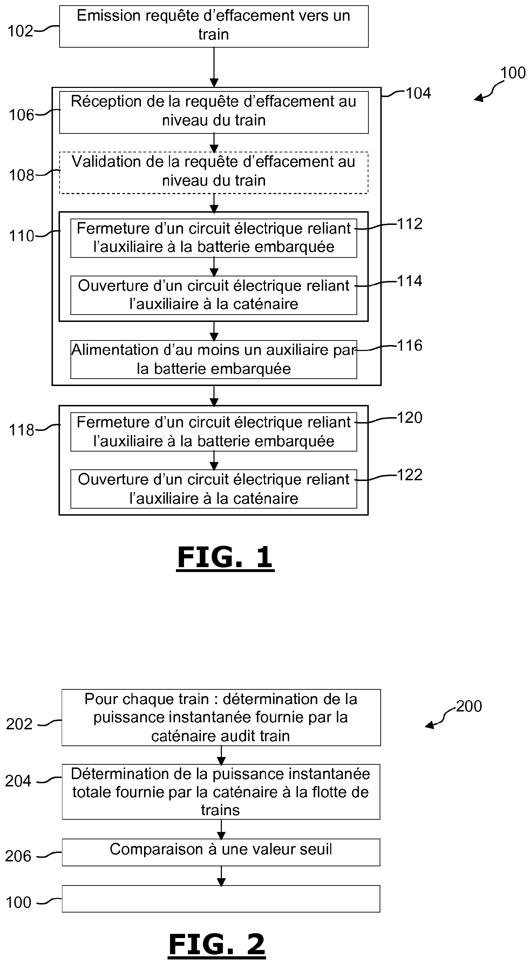

La FIGURE 1 est une représentation schématique d'un exemple de réalisation non limitatif d'un procédé de régulation de puissance selon l'invention.

Le procédé 100 de la FIGURE 1 comprend une étape 102 d'émission d'une requête, dite d'effacement, vers le train pour que le train diminue la puissance électrique instantanée (PEI) que lui fournit la caténaire, sans pour autant diminuer la PEI consommée au sein du train.

L'étape 102 est suivie d'au moins une itération d'une phase 104, dite de régulation, pour effectivement diminuer la PEI tirée par le train depuis la caténaire.

La phase de régulation 104 commence par une étape 106 de réception de la requête d'effacement.

Lors d'une étape optionnelle 108, la requête d'effacement est confirmée/validée au niveau du train. Cette validation peut être réalisée de manière manuelle, par exemple par le conducteur du véhicule, ou de manière automatisée. La confirmation peut par exemple être réalisée en fonction de l'état de charge d'au moins une batterie embarquée dans le véhicule et qui sera utilisée pour diminuer la PEI tirée depuis la caténaire.

La phase 104 comprend ensuite une étape 110 de basculement de l'alimentation d'au moins un auxiliaire électrique du train, actuellement alimenté par la caténaire, vers une batterie embarquée dans le train.

Pour ce faire, une étape 112 réalise la fermeture d'un circuit reliant l'auxiliaire électrique à la batterie embarquée. La fermeture de ce circuit peut être réalisée par commande d'un premier contacteur commandable. L'auxiliaire électrique commence alors à être alimenté par la batterie embarquée.

Puis lors d'une étape 114, un circuit reliant l'auxiliaire électrique à la caténaire est ouvert, par exemple en commandant un deuxième contacteur commandable.

A la fin de l'étape de basculement 110, l'auxiliaire électrique n'est plus alimenté par la caténaire, mais uniquement par la batterie.

Alternativement, il est possible de laisser l'auxiliaire électrique relié à la caténaire de sorte qu'une partie de la puissance d'alimentation dudit auxiliaire est toujours fournie par la caténaire.

L'étape 110 de basculement est réalisé à tour de rôle, ou en même temps, pour autant d'auxiliaires électriques.

Il est à noter que l'alimentation du ou des moteurs électriques de traction du train, (la motorisation électrique de traction) est toujours assurée par la caténaire et que le basculement ne concerne que les équipements/dispositifs auxiliaires électriques au sein du train.

L'étape 110 est suivie d'une étape 116 d'alimentation de l'auxiliaire électrique par la batterie embarquée, seule ou en plus de la caténaire.

L'étape 116 est réalisée pour une durée prédéterminée, éventuellement calculée en fonction du niveau de charge de la batterie embarquée.

Cette étape 116 peut alternativement être réalisée jusqu'à épuisement de la batterie, ou jusqu'à une réception d'une requête, dite de fin d'effacement.

La phase 104 de régulation est suivie d'une étape 118 de re-basculement de l'alimentation du ou des auxiliaires électriques alimentés par la batterie embarquée vers la caténaire. Cette étape de re-basculement 118 est réalisée pour chaque auxiliaire à tour de rôle, ou en même.

L'étape de re-basculement 118 comprend une étape 120 réalisant la fermeture du circuit reliant l'auxiliaire électrique à la caténaire, par exemple par commande du deuxième contacteur commandable.

Puis lors d'une étape 122, le circuit reliant l'auxiliaire électrique à la batterie est ouvert, par exemple en commandant le premier contacteur commandable.

La FIGURE 2 est une représentation schématique d'un exemple de réalisation non limitatif d'un procédé selon l'invention de modulation de la puissance instantanée totale fournie à une flotte de véhicules ferroviaires.

Le procédé 200 de la FIGURE 2 comprend une étape 202 déterminant au sein de chaque train la PEI tirée depuis la caténaire.

Puis une étape 204, détermine, par sommation, la PEI totale (PEIT) tirée depuis la caténaire par la totalité de la flotte de trains.

Lors d'une étape 206, la valeur de la PEIT est comparée à une valeur seuil prédéterminée. Si la valeur seuil n'est pas atteinte, il est mis fin au procédé 200.

Si la valeur seuil est atteinte alors, le procédé 200 se poursuit par au moins une itération du procédé 100 pour au moins un train de la flotte.

Le procédé 200 peut être déclenché par une requête émise depuis un site central distant.

Alternativement, le procédé 200 peut être réitéré à une fréquence prédéterminée, en particulier lors d'une tranche horaire prédéterminée correspondant à une période de forte consommation de puissance.

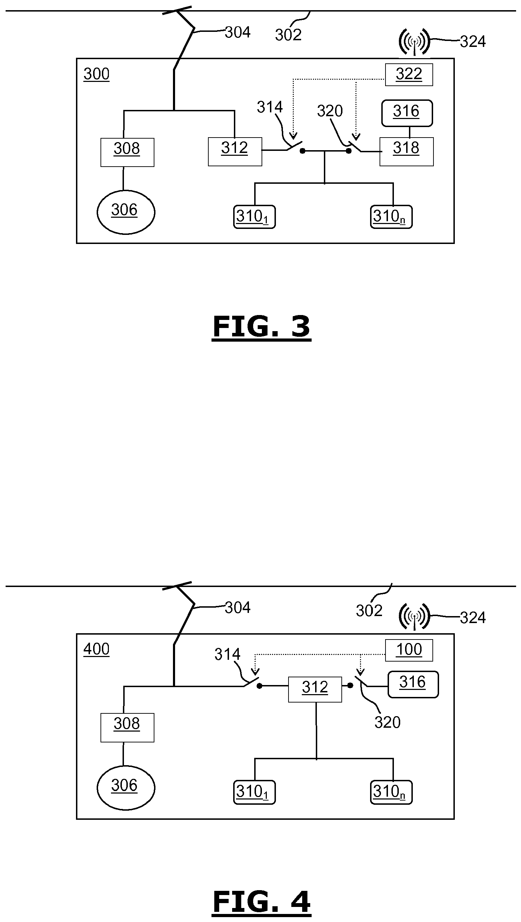

La FIGURE 3 est une représentation schématique d'un premier exemple de réalisation non limitatif d'un véhicule selon l'invention.

Le véhicule ferroviaire 300, représenté sur la FIGURE 3, est un train électrique alimenté par une caténaire 302 au travers d'un pantographe 304.

Le train 300 comporte un ou plusieurs moteurs électriques de traction 306 permettant de mouvoir le train sur une voie ferrée (non représentée). Chaque moteur 306 est alimenté par la caténaire 302 au travers d'un convertisseur 308.

Le train 300 comprend également plusieurs auxiliaires électriques 310₁-310ₙ. Chaque auxiliaire 310 peut être un appareil de chauffage, un appareil de climatisation, un appareil d'aération, un appareil d'éclairage, etc.

Chaque auxiliaire 310 peut être alimenté par la caténaire 302 au travers d'un convertisseur 312. Ce dernier est relié électriquement à chaque auxiliaire électrique 310 par un contacteur 314 commandable entre une position ouverte n'autorisant pas le passage du courant électrique et une position fermée autorisant le passage du courant électrique.

Le train 300 comprend également au moins une batterie embarquée 316 qui peut alimenter chaque auxiliaire 310 au travers d'un convertisseur 318. Pour cela, le convertisseur 318 est relié électriquement à chaque auxiliaire électrique 310 par un contacteur 320 commandable entre une position ouverte n'autorisant pas le passage du courant électrique et une position fermée autorisant le passage du courant électrique.

Le train 300 comprend en outre un module 322 pour réaliser une phase de régulation de PEI, et en particulier pour commander les contacteurs 314 et 320. Le module 322 peut être une carte, ou un boitier, électronique/électronique.

Par ailleurs, le train 300 peut comprendre une antenne 324 pour :
- recevoir au moins une requête d'effacement depuis un site distant ; et
- éventuellement, émettre une valeur de la PEI fournie par la caténaire au train 300.

Dans le train 300, lorsqu'aucune régulation de PEI n'est réalisée, le contacteur 314 est fermé et le contacteur 320 est ouvert. Les auxiliaires 310 sont alimentés par la caténaire 302.

Lorsqu'une régulation de PEI est réalisée, le contacteur 320 est fermé, et éventuellement le contacteur 314 est ouvert. Les auxiliaires 310 sont alimentés, éventuellement uniquement, par la batterie embarquée 316.

De plus, lorsqu'aucune régulation de PEI n'est réalisée, la batterie 316 peut être chargée par la caténaire 302.

La FIGURE 4 est une représentation schématique d'un deuxième exemple de réalisation non limitatif d'un véhicule selon l'invention.

Le véhicule ferroviaire 400, représenté sur la FIGURE 4, est un train et comprend tous les éléments du train 300 de la FIGURE 3, à l'exception du convertisseur 318.

De plus, à la différence du train 300, dans le train 400, le contacteur commandable 314 est disposé entre le convertisseur 312 et la caténaire 302, et le contacteur commandable 320 est disposé entre le convertisseur 312 et la batterie 316.

Par ailleurs, la batterie 316 est reliée à la caténaire 302 par les contacteurs commandables 314 et 320.

Lorsqu'aucune régulation de la PEI n'est réalisée, le contacteur 314 est fermé et le contacteur 320 est ouvert. Les auxiliaires 310 sont alimentés par la caténaire 302.

Lorsqu'une régulation de PEI est réalisée, le contacteur 320 est fermé, et éventuellement le contacteur 314 est ouvert. Les auxiliaires 310 sont alimentés, éventuellement uniquement, par la batterie embarquée 316.

De plus, lorsqu'aucune régulation de PEI n'est réalisée, la batterie 316 peut être chargée par la caténaire 302, au travers du convertisseur 312.

Alternativement, la batterie 316 peut être chargée au travers d'un convertisseur dédié, et éventuellement au travers d'une ligne électrique dédiée.

Bien entendu, l'invention n'est pas limitée aux exemples détaillés ci-dessus et de nombreux aménagements peuvent être apportés sans sortir du cadre de l'invention.

## Revendications

1. Procédé (100) de régulation de la puissance électrique instantanée fournie par une source électrique externe (302) à un véhicule ferroviaire (300;400), ledit procédé (100) comprenant au moins une itération d'une phase (104), dite de régulation, comprenant les étapes suivantes :
- réception (106), au niveau dudit véhicule ferroviaire (300;400), d'une requête, dite d'effacement, pour modifier la puissance instantanée fournie par ladite source externe (302) audit véhicule (300;400) ;
- basculement (110) d'au moins une partie de l'alimentation d'au moins un auxiliaire électrique (310) dudit véhicule ferroviaire (300;400), préalablement alimenté par ladite source externe (302), vers une source électrique embarquée (316) dans ledit véhicule ferroviaire (300;400), tout en alimentant la motorisation électrique de traction (306) dudit véhicule ferroviaire (300;400) par ladite source externe (302) ; et
- alimentation (116) dudit au moins un auxiliaire électrique (310) par ladite source électrique embarquée (316).

2. Procédé (100) selon la revendication précédente, **caractérisé en ce que** l'étape (116) d'alimentation d'au moins un auxiliaire électrique (310) par la source embarquée (316) est limitée à une durée prédéterminée, au bout de laquelle l'alimentation dudit auxiliaire électrique (310) est rebasculée vers la source externe (302).

3. Procédé (100) selon l'une quelconque des revendications précédentes, **caractérisé en ce que** l'étape (110) de basculement de l'alimentation d'au moins un auxiliaire électrique (310) vers la source embarquée (316) comprend les opérations suivantes :
- fermeture (112) d'un circuit électrique (320) reliant ledit auxiliaire électrique (310) à ladite source embarquée (316), puis
- ouverture (114) d'un circuit électrique (314) reliant ledit auxiliaire électrique (310) à la source externe (302) ;
de sorte qu'il n'y a pas de rupture d'alimentation dudit auxiliaire électrique (310).

4. Procédé (100) selon l'une quelconque des revendications précédentes, **caractérisé en ce qu'**au moins un auxiliaire électrique (310) est alimenté par la source embarquée (316) au travers d'un convertisseur (318) dédié à ladite source embarquée (316).

5. Procédé (100) selon l'une quelconque des revendications 1 à 3, **caractérisé en ce qu'**au moins un auxiliaire électrique (310) est alimenté par la source embarquée (316) au travers d'un convertisseur (312) dédié audit au moins un auxiliaire électrique (310).

6. Procédé (100) selon l'une quelconque des revendications précédentes, **caractérisé en ce qu'**il comprend une étape de charge de la source embarquée (316) par la source externe (302), lorsque ladite source embarquée (316) est une source électrique rechargeable.

7. Procédé (100) selon l'une quelconque des revendications précédentes, **caractérisé en ce que** la requête d'effacement est émise, ou confirmée, par un conducteur du véhicule ferroviaire (300;400).

8. Procédé (100) selon l'une quelconque des revendications 1 à 6, **caractérisé en ce que** la requête d'effacement est émise par un site distant du véhicule ferroviaire (300;400) et en communication sans fil avec ledit véhicule (300;400).

9. Procédé (200) de modulation de la puissance électrique instantanée fournie à une flotte de véhicules ferroviaires, par une source externe (302) auxdits véhicules, ledit procédé (200) comprenant au moins une itération d'une phase, dite de modulation de puissance, comprenant les étapes suivantes :
- détermination (202,204) d'une puissance instantanée, dite totale, fournie à ladite flotte de véhicules ferroviaires par ladite source externe (302), et
- régulation de la puissance instantanée fournie par ladite source externe (302) à au moins un véhicule de ladite flotte, dit véhicule cible, par le procédé (100) selon l'une quelconque des revendications précédentes.

10. Véhicule ferroviaire (300;400) comprenant une interface d'alimentation électrique (304) depuis une source externe (302), une motorisation électrique de traction (306) et au moins un auxiliaire électrique (310), ledit véhicule (300;400) comprenant en outre :
- au moins une source électrique embarquée (316), en particulier rechargeable,
- au moins un circuit électrique commandable (320) pour relier, ou non, au moins un auxiliaire électrique (310) à ladite au moins une source électrique embarquée (316), et
- au moins un module de commande (100) dudit circuit électrique (320), configuré pour mettre en œuvre toutes les étapes du procédé (100) selon l'une quelconque des revendications 1 à 8.

11. Véhicule (300;400) selon la revendication précédente, **caractérisé en ce qu'**il comprend un moyen (324) de communication sans fil avec un site distant.

## Patentansprüche

1. Verfahren (100) zum Regeln der elektrischen Momentanleistung, die durch eine externe elektrische Quelle (302) an ein Schienenfahrzeug (300; 400) bereitgestellt wird, wobei das Verfahren (100) wenigstens ein Wiederholen einer sogenannten Regelphase (104) umfasst, die die folgenden Schritte umfasst:
- Empfangen (106), an dem Schienenfahrzeug (300; 400), einer sogenannten Löschanfrage zum Modifizieren der durch die externe Quelle (302) an das Fahrzeug (300; 400) bereitgestellten Momentanleistung;
- Umschalten (110) von wenigstens einem Teil der Versorgung von wenigstens einer elektrischen Hilfseinrichtung (310) des Schienenfahrzeugs (300; 400), die zuvor durch die externe Quelle (302) versorgt wurde, auf eine eingebettete elektrische Quelle (316) in dem Schienenfahrzeug (300; 400), während der elektrische Fahrantrieb (306) des Schienenfahrzeugs (300; 400) durch die externe Quelle (302) versorgt wird; und
- Versorgen (116) der wenigstens einen Hilfseinrichtung (310) durch die eingebettete elektrische Quelle (316).

2. Verfahren (100) nach dem vorhergehenden Anspruch, **dadurch gekennzeichnet, dass** der Schritt (116) des Versorgens von wenigstens einer elektrischen Hilfseinrichtung (310) durch die eingebettete Quelle (316) auf eine vorbestimmte Dauer begrenzt ist, nach deren Ablauf die Versorgung der elektrischen Hilfseinrichtung (310) wieder auf die externe Quelle (302) umgeschaltet wird.

3. Verfahren (100) nach einem der vorhergehenden Ansprüche, **dadurch gekennzeichnet, dass** der Schritt (110) des Umschaltens der Versorgung von wenigstens einer elektrischen Hilfseinrichtung (310) auf die eingebettete Quelle (316) die folgenden Vorgänge umfasst:
- Schließen (112) eines Stromkreises (320), der die elektrische Hilfseinrichtung (310) mit der eingebetteten Quelle (316) verbindet, anschließend
- Öffnen (114) eines Stromkreises (314), der die elektrische Hilfseinrichtung (310) mit der externen Quelle (302) verbindet;
so dass es keine Unterbrechung in der Versorgung der elektrischen Hilfseinrichtung (310) gibt.

4. Verfahren (100) nach einem der vorhergehenden Ansprüche, **dadurch gekennzeichnet, dass** wenigstens eine elektrische Hilfseinrichtung (310) durch die eingebettete Quelle (316) mittels eines Wandlers (318) versorgt wird, der für die eingebettete Quelle (316) dezidiert ist.

5. Verfahren (100) nach einem der Ansprüche 1 bis 3, **dadurch gekennzeichnet, dass** wenigstens eine elektrische Hilfseinrichtung (310) durch die eingebettete Quelle (316) mittels eines Wandlers (312) versorgt wird, der für die wenigstens eine elektrische Hilfseinrichtung (310) dezidiert ist.

6. Verfahren (100) nach einem der vorhergehenden Ansprüche, **dadurch gekennzeichnet, dass** es einen Schritt des Aufladens der eingebetteten Quelle (316) durch die externe Quelle (302) umfasst, wenn die eingebettete Quelle (316) eine wiederaufladbare elektrische Quelle ist.

7. Verfahren (100) nach einem der vorhergehenden Ansprüche, **dadurch gekennzeichnet, dass** die Löschanfrage durch einen Fahrzeugführer des Schienenfahrzeugs (300; 400) gesendet oder bestätigt wird.

8. Verfahren (100) nach einem der Ansprüche 1 bis 6, **dadurch gekennzeichnet, dass** die Löschanfrage von einem entfernten Standort des Schienenfahrzeugs (300; 400) und in drahtloser Kommunikation mit dem Fahrzeug (300; 400) gesendet wird.

9. Verfahren (200) zum Modulieren der elektrischen Momentanleistung, die an eine Flotte von Schienenfahrzeugen durch eine externe Quelle (302) an die Fahrzeuge bereitgestellt wird, wobei das Verfahren (200) wenigstens ein Wiederholen einer sogenannten Leistungsmodulationsphase umfasst, die die folgenden Schritte umfasst:
- Bestimmen (202,204) einer sogenannten Gesamtmomentanleistung, die der Flotte von Schienenfahrzeugen durch die externe Quelle (302) bereitgestellt wird, und
- Regeln der Momentanleistung, die durch die externe Quelle (302) an wenigstens ein Fahrzeug der Flotte, das Zielfahrzeug, bereitgestellt wird, durch das Verfahren (100) nach einem der vorhergehenden Ansprüche.

10. Schienenfahrzeug (300; 400), das eine Schnittstelle (304) für elektrische Versorgung von einer externen Quelle (302), einen elektrischen Fahrantrieb (306) und wenigstens eine elektrische Hilfseinrichtung (310) umfasst, wobei das Fahrzeug (300; 400) ferner Folgendes umfasst:
- wenigstens eine eingebettete elektrische Quelle (316), die insbesondere wiederaufladbar ist,
- wenigstens einen steuerbaren Stromkreis (320) zum Verbinden oder Nicht-Verbinden von wenigstens einer elektrischen Hilfseinrichtung (310) mit der wenigstens einen eingebetteten elektrischen Quelle (316), und
- wenigstens ein Steuermodul (100) des Stromkreises (320), das zum Ausführen all der Verfahrensschritte (100) nach einem der Ansprüche 1 bis 8 konfiguriert ist.

11. Fahrzeug (300; 400) nach dem vorhergehenden Anspruch, **dadurch gekennzeichnet, dass** es ein Mittel (324) zur drahtlosen Kommunikation mit einem entfernten Standort umfasst.

## Claims

1. Method (100) for controlling instant electrical power supplied by an external electrical source (302) to a railway vehicle (300; 400), said method (100) comprising at least one iteration of a phase (104), referred to as a control phase, comprising the following steps:
- receiving (106), at said railway vehicle (300; 400), a request, referred to as an erasure request, to modify the instant power supplied by said external source (302) to said vehicle (300; 400);
- switching (110) at least some of the power supply of at least one electrical auxiliary (310) of said railway vehicle (300; 400), previously powered by said external source (302), to an on-board electrical source (316) in said railway vehicle (300; 400), while said external source (302) powers the electric traction motor (306) of said railway vehicle (300; 400); and
- powering (116) said at least one electrical auxiliary (310) by means of said on-board electrical source (316).

2. Method (100) according to the preceding claim, **characterized in that** the step (116) of powering at least one electrical auxiliary (310) by means of the on-board source (316) is limited to a predetermined duration, at the end of which the power supply of said electrical auxiliary (310) is switched back to the external source (302).

3. Method (100) according to either of the preceding claims, **characterized in that** the step (110) of switching the power supply from at least one electrical auxiliary (310) to the on-board source (316) comprises the following operations:
- closing (112) an electrical circuit (320) connecting said electrical auxiliary (310) to said on-board source (316), then
- opening (114) an electrical circuit (314) connecting said electrical auxiliary (310) to the external source (302),
such that there is no break in the power supply of said electrical auxiliary (310).

4. Method (100) according to any of the preceding claims, **characterized in that** at least one electrical auxiliary (310) is powered by the on-board source (316) through a converter (318) dedicated to said on-board source (316).

5. Method (100) according to any of claims 1 to 3, **characterized in that** at least one electrical auxiliary (310) is powered by the on-board source (316) through a converter (312) dedicated to said at least one electrical auxiliary (310).

6. Method (100) according to any of the preceding claims, **characterized in that** it comprises a step of charging the on-board source (316) by means of the external source (302) if said on-board source (316) is a rechargeable electrical source.

7. Method (100) according to any of the preceding claims, **characterized in that** the erasure request is sent, or confirmed, by a driver of the railway vehicle (300; 400).

8. Method (100) according to any of claims 1 to 6, **characterized in that** the erasure request is sent by a site which is remote from the railway vehicle (300; 400) and in wireless communication with said vehicle (300; 400).

9. Method (200) for modulating the instant electrical power supplied to a fleet of railway vehicles by a source (302) external to said vehicles, said method (200) comprising at least one iteration of a phase, referred to as a power modulation phase, comprising the following steps:
- determining (202, 204) an instant, total power supplied to said fleet of railway vehicles by said external source (302), and
- controlling the instant power supplied by said external source (302) to at least one vehicle of said fleet, referred to as the target vehicle, by the method (100) according to any of the preceding claims.

10. Railway vehicle (300; 400) comprising an electrical power supply interface (304) from an external source (302), an electric traction motor (306) and at least one electrical auxiliary (310), said vehicle (300; 400) further comprising:
- at least one, in particular rechargeable, on-board electrical source (316),
- at least one controllable electrical circuit (320) for connecting, or not connecting, at least one electrical auxiliary (310) to said at least one on-board electrical source (316), and
- at least one control module (100) of said electrical circuit (320), configured to carry out all the steps of the method (100) according to any of claims 1 to 8.

11. Vehicle (300; 400) according to the preceding claim, **characterized in that** it comprises a means (324) for wireless communication with a remote site.
